# EUROPÄISCHE PATENTANMELDUNG

(11) **EP 3 666 494 A1**
(43) Veröffentlichungstag der Anmeldung: **17.06.2020**
(21) Anmeldenummer: 19214872.4
(22) Anmeldetag: 10.12.2019
(51) Int. Cl.: B29C 45/73, B29C 45/26, B29K 105/00

(54) **KERNKÜHLSYSTEM FÜR EINEN FORMKERN EINES SPRITZGIESSWERKZEUGES**

(30) Priorität: 14.12.2018 DE 102018132339
(71) Anmelder: MHT Mold & Hotrunner Technology AG, 65239 Hochheim (DE)
(72) Erfinder: WEGMANN, Klaus, 55218 Ingelheim (DE); KALBHEN, Bernd, 55278 Dolgesheim (DE); KRÄNKEL, Harry, 64380 Roßdorf (DE)
(74) Vertreter: WSL Patentanwälte Partnerschaft mbB

(57) **Zusammenfassung**

Die vorliegende Erfindung betrifft ein Kühlrohr (1) mit einer Außenfläche und mit einer sich von einem hinteren Ende zu einem vorderen Ende erstreckenden Längsachse für einen Formkern (16) eines Spritzgießwerkzeuges zum Spritzgießen von Preforms (22) aus Kunststoff, wobei das Kühlrohr (1) einen ersten Einlass und einen ersten Auslass aufweist, die über einen ersten Fluidkanal miteinander verbunden sind, wobei der erste Einlass (7) näher am hinteren Ende angeordnet ist als der erste Auslass (8). Um ein Kernkühlsystem bzw. ein Kühlrohr bereitzustellen, durch die ein stabiles Abstützen des Kühlrohrs, eine möglichst einfache und kostengünstige konturnahe Ausbildung des Kernkühlkanals und eine verbesserte homogenere Kühlung des Formkerns ermöglicht wird, wird erfindungsgemäß vorgeschlagen, dass das Kühlrohr (1) einen zweiten Einlass und einen zweiten Auslass aufweist, die über einen zweiten Fluidkanal miteinander verbunden sind, wobei der zweite Einlass (10) näher am hinteren Ende angeordnet ist als der zweite Auslass (11) und der erste Auslass (8) näher am hinteren Ende angeordnet ist als der zweite Auslass (11).

## Beschreibung

Die vorliegende Erfindung betrifft ein Kernkühlsystem für einen Formkern zum Spritzgießen von Preforms aus Kunststoff, bestehend aus einem Formkern und einem Kühlrohr. Preforms werden in diesem Zusammenhang auch als Vorformlinge bezeichnet.

Die vorliegende Erfindung wird insbesondere bei Kernkühlsystemen von Spritzgießwerkzeugen verwendet, die zur Herstellung von Preforms geeignet sind, kann aber auch bei Kühlsystemen anderer Werkzeuge Verwendung finden.

Spritzgießwerkzeuge können zur Herstellung unterschiedlichster Produkte verwendet werden, wobei sie insbesondere zur Herstellung von Preforms eingesetzt werden, aus denen durch weitere Umformungsverfahren fertige Endprodukte hergestellt werden. Beispielsweise wird durch das Aufblasen eines zuvor mittels Spritzgießverfahrens hergestellten Preforms eine PET-Flasche hergestellt. Spritzgießwerkzeuge weisen in der Regel eine Vielzahl von Kavitäten (Formbehälter), z.B. 96 Kavitäten, und dazugehörige Formkerne auf. Zur Herstellung eines Preforms werden die Formkerne in die Kavitäten eingeführt. Kavität und Formkern sind dabei derart ausgebildet und angeordnet, dass nach dem Einführen des Formkerns in die Kavität zwischen der Innenfläche der Kavität und der Außenfläche des Formkerns ein sogenannter Formraum ausgebildet ist, dessen Form der gewünschten Form des Preforms entspricht. Der Formraum wird nach außen durch die Kavität und nach innen durch den Formkern begrenzt. Folglich entsprechen die Außenkontur des Preforms der Innenkontur der Kavität und die Innenkontur des Preforms der Außenkontur des in die Kavität ragenden Formkerns. In den Formraum wird die Schmelze - in der Regel plastifizierter Kunststoff, z.B. PET, - unter hohem Druck eingespritzt. Sobald die Schmelze genügend abgekühlt und dadurch ausreichend verfestigt ist, wird die Form geöffnet und die verfestigte Schmelze als Preform aus der Kavität entnommen.

Um die Zykluszeiten, d.h. die Zeit von einem Spritzvorgang bis zu dem nächsten Spritzvorgang, zu reduzieren, ist es üblich, den Preform zu einem sehr frühen Zeitpunkt aus der Kavität zu entnehmen und von dem Formkern zu lösen. Dadurch kann eine höhere Effizienz des Werkzeuges erreicht werden. Dazu ist es notwendig, die Schmelze, sobald sie in dem Formraum zwischen Formkern und Kavität angekommen ist, effizient zu kühlen, damit der Preform nach kurzer Zeit zumindest derart verfestigt ist, dass er sich bei der Entnahme nicht in ungewünschter Weise verformt bzw. Rückstände der Schmelze am Formkern oder in der Kavität zurückbleiben.

Um eine reibungslose Herstellung von Preforms zu gewährleisten, muss die sich im Formraum befindende Schmelze nach dem Einspritzen daher schnell und effizient abgekühlt werden. Die Kühlung des Preforms erfolgt dabei durch den Formkern, der dementsprechend auch als Kühlstift fungiert. Der Formkern wird mit einem Kernkühlsystem gekühlt, das in der Regel auf einem Kühlfluidkreislauf beruht. Der Formkern ist zu diesem Zwecke als einseitig geschlossene Hülse ausgebildet, in die Kühlfluid kontinuierlich hinein- und anschließend wieder hinausgeleitet wird. Ein solches Kernkühlsystem setzt sich im Sinne der vorliegenden Erfindung zumindest aus dem Formkern selbst sowie einem Kühlrohr, durch das das notwendige Kühlfluid (Kühlflüssigkeit oder Kühlgas) in das Innere des Formkerns geleitet wird, zusammen.

Solch ein Kernkühlsystem ist aus der EP 1019 234 B1 bekannt.

In der Regel wird Kühlfluid über das Kühlrohr zur Spitze des Formkerns geleitet, tritt an dieser Stelle aus dem Kühlrohr aus und fließt durch den Spalt zwischen der Außenfläche des Kühlrohrs und der Innenfläche des Formkerns wieder ab.

Prinzipiell kann die Flussrichtung auch umgekehrt verlaufen.

Der Kanal, der durch die Innenfläche des Kühlrohrs begrenzt ist, wird im Folgenden als Fluidkanal oder auch als erster Fluidkanal und der Kanal, der sich als Spalt zwischen der Innenfläche des Formkerns und der Außenfläche des Kühlrohrs erstreckt, als Kernkühlkanal bezeichnet. Der gesamte Bereich, in dem Kühlfluid fließen kann, d. h. die Kombination aus erstem Fluidkanal und Kernkühlkanal, wird im Folgenden als Kühlleitung bezeichnet.

Da das Kühlrohr in der Regel mit Kühlwasser beaufschlagt wird, kann es zu einer axialen Bewegung des Kühlrohr innerhalb des Formkerns kommen. Durch den Wasserdruck wird somit das Kühlrohr nach vorne in Richtung der Spitze des Formkerns gedrückt. Es sind daher bereits Kühlrohre bekannt, die an ihrer Spitze Vorsprünge aufweisen. Diese Vorsprünge sollen verhindern, dass es bei einer Bewegung des Kühlrohrs entlang der Längsachse in Richtung der Spitze des Formkerns zu einem Verschluss der Kühlleitung kommt.

Vereinzelt wurden Zentrierelemente verwendet, die über die Außenfläche des Kühlrohrs gezogen werden, um das Kühlrohr im Zentrum des Formkerns zu positionieren. Eine Abstützung des Kühlrohrs, um eine Vorwärtsbewegung des Kühlrohrs innerhalb des Formkerns zu verhindern, ist jedoch hiermit nicht verbunden.

Grundsätzlich ist eine gleichmäßige Kühlung des Formkerns wünschenswert. Dazu müsste der Formkern am besten eine konstante Wanddicke aufweisen und durch die Außenfläche des Kühlrohrs sichergestellt werden, dass der sich zwischen Außenfläche des Kühlrohrs und Innenkontur des Formkerns bildende Kühlkanal ebenfalls eine im wesentlichen konstante Dicke aufweist. Eine solche konturennahe Ausgestaltung des Kühlrohrs ist erstrebenswert, aber nicht einfach und kostengünstig herzustellen. Jedes Endprodukt, folglich jede Variante von PET-Flaschen, wird aus einem genau auf dieses Produkt zugeschnittenen Preform gefertigt. Daher unterscheiden sich die Preforms der Produkte untereinander genauso wie sich die Produkte untereinander unterscheiden. Ebenso unterscheiden sich die dabei verwendeten Formkerne und folglich auch die Innenkonturen der Formkerne. Schlussendlich muss daher für jede Variante von Formkernen eine eigene Variante von Kühlrohren hergestellt werden, um einen konturnahen Kernkühlkanal bereitzustellen. Dies ist in der Regel mit einem hohem Aufwand und hohen Kosten verbunden.

Zudem hat sich die Verwendung von Vorsprüngen an der Stirnseite des Kühlrohrs als nachteilig erwiesen, da sich das Kühlfluid beim Austreten aus dem Kühlrohr nicht gleichmäßig in alle Richtungen verteilt, weil das Kühlfluid die Vorsprünge umfließen muss. Dadurch kommt es zu einer inhomogenen Kühlung des Preforms, insbesondere in der Nähe der Vorsprünge an der Spitze des Formkerns.

Das Abstützen des Kühlrohrs über die Vorsprünge ist zudem nicht sehr stabil und mit einem erhöhten Verschleiß verbunden, da das Kühlrohr über die Vorsprünge nur an der Spitze des Kühlrohrs abgestützt wird. Da die Vorsprünge keine zur Innenkontur des Formkerns korrespondierende Außenkontur aufweist, kommst es zudem beim Abstützen zu einer erhöhten Reibung zwischen der Innenfläche des Formkerns und den Vorsprüngen und somit zu einem erhöhten Verschleiß der Vorsprünge.

Ausgehend von diesem Stand der Technik ist es daher Aufgabe der vorliegenden Erfindung, mindestens eines der oben genannten Probleme zu lösen oder zumindest zu verringern. Folglich bestehen die der vorliegenden Erfindung zugrunde liegenden Aufgaben darin, ein Kernkühlsystem bzw. ein Kühlrohr bereitzustellen, durch die ein stabiles Abstützen des Kühlrohrs, eine möglichst einfache und kostengünstige konturnahe Ausbildung des Kernkühlkanals und eine verbesserte homogenere Kühlung des Formkerns ermöglicht wird.

Erfindungsgemäß wird zumindest eine dieser Aufgaben durch ein Kühlrohr gemäß Anspruch 1, bzw. ein Kernkühlsystem gemäß Anspruch 11 gelöst.

Das erfindungsgemäße Kühlrohr ist für einen Formkern eines Spritzgießwerkzeuges zum Spritzgießen von Preforms aus Kunststoff vorgesehen. Das Kühlrohr erstreckt sich dabei entlang einer Längsachse von einem hinteren Ende zu einem vorderen Ende und weist eine Außenfläche auf, wobei ein erster Fluidkanal vorgesehen ist, welcher sich von einem ersten Einlass zu einem ersten Auslass erstreckt, wobei der erste Einlass näher am hinteren Ende angeordnet ist als der erste Auslass, wobei das Kühlrohr einen zweiten Einlass und einen zweiten Auslass aufweist, die über einen zweiten Fluidkanal miteinander verbunden sind, wobei der zweite Einlass näher am hinteren Ende angeordnet ist als der zweite Auslass und der erste Auslass näher am hinteren Ende angeordnet ist als der zweite Auslass.

Dadurch, dass zwei Fluidkanäle im Kühlrohr angeordnet sind, wird sowohl derZufuhrkanal als auch der Abfuhrkanal zumindest in einem Abschnitt innerhalb des Kühlrohrs geführt, so dass das Kühlrohr in diesem Abschnitt an der Außenfläche abgestützt werden kann, ohne den Kühlfluidstrom zu beeinträchtigen.

In einer bevorzugten Ausführungsform ist vorgesehen, dass das Kühlrohr einen vorderen Abschnitt, welcher das vordere Ende umfasst, und einen hinteren Abschnitt, welcher das hintere Ende umfasst, aufweist, wobei der erste Fluidkanal im vorderen und im hinteren Abschnitt angeordnet ist und der zweite Fluidkanal nur im hinteren Abschnitt angeordnet ist, wobei vorzugsweise der hintere Abschnitt eine größere Querschnittsfläche als der vordere Abschnitt aufweist.

Das Kühlrohr kann somit im hinteren Abschnitt abgestützt werden. Im vorderen Abschnitt verläuft der Kernkühlkanal somit in dem Spalt zwischen der Innenfläche des Formkerns und der Außenfläche des Kühlrohrs.

In einer weiteren bevorzugten Ausführungsform sind der erste und der zweite Einlass derart positioniert, dass bei einer Drehung des Kühlrohres um 180° um seine Längsachse der erste und der zweite Einlass Ihre Positionen tauschen. Dies hat zur Folge, dass das Kühlrohr in zwei unterschiedlichen Einbausituationen, nämlich in zwei um 180° um die Längsachse gegeneinander verdrehten Positionen, verwendet werden kann. In der einen Position sind der erste Einlass mit einer Kühlfluidzufuhr und der zweite Einlass mit einer Kühlfluidabfuhr verbunden. Das Kühlfluid wird somit über den ersten Einlass in das Kühlrohr zugeführt, verlässt das Kühlrohr am ersten Auslass, strömt an der Außenfläche des Kühlrohr vom vorderen Ende in Richtung des hinteren Endes zurück, tritt in den zweiten Auslass wieder ins Kühlrohr ein und schließlich über den zweiten Einlass in die Kühlfluidabfuhr.

In der anderen Position strömt das Kühlfluid in der entgegengesetzten Richtung. Hier sind nun der zweite Einlass mit der Kühlfluidzufuhr und der erste Einlass mit einer Kühlfluidabfuhr verbunden. Das Kühlfluidzufuhr wird somit über den zweiten Einlass in das Kühlrohr zugeführt, verlässt das Kühlrohr am zweiten Auslass, strömt an der Außenfläche des Kühlrohr vom hinteren Ende in Richtung des vorderen Endes, tritt in den ersten Auslass wieder ins Kühlrohr ein und schließlich über den ersten Einlass in die Kühlfluidabfuhr.

In einer weiteren bevorzugten Ausführungsform ist der erste Einlass und/oder der zweite Einlass in der Stirnfläche des Kühlrohrs am hinteren Ende angeordnet sind. Diese Anordnung ermöglicht eine einfache Kühlmittelzufuhr und Kühlmittelabfuhr.

In einer weiteren bevorzugten Ausführungsform ist der zweite Auslass in der Mantelfläche angeordnet ist, wobei vorzugsweise der erste Auslass in der Stirnfläche des Kühlrohrs am vorderen Ende angeordnet ist. Diese Anordnung hat sich als besonders effektiv für eine gleichmäßige Kühlung des Formkernes erwiesen.

In einer weiteren bevorzugten Ausführungsform ist an der Außenfläche des Kühlrohrs zumindest ein über die Außenfläche vorstehendes Zentrierelement vorgesehen, wobei vorzugsweise sich das Zentrierelement wendeiförmig in Längsrichtung um die Außenfläche des Kühlrohrs erstreckt.

Das Zentrierelement ist dafür vorgesehen, mit einem Formkern zumindest dann in Kontakt zu treten, wenn das Kühlrohr nicht exakt zentrisch im Formkern angeordnet ist. Das Zentrierelement dient nicht der Abstützung des Kühlrohrs im Formkern.

In einer weiteren bevorzugten Ausführungsform sind zumindest zwei Zentrierelemente vorgesehen, sodass, wenn das Kühlrohr in einen Formkern eingesetzt wird, dessen Innendurchmesser in etwa dem Außendurchmesser der Zentrierelemente entspricht, zwischen den Zentrierelementen, der Außenfläche des Kühlrohrs und der Innenfläche des Formkernes dritte Fluidkanäle gebildet werden, wobei vorzugsweise der zweite Auslass den zweiten Fluidkanal mit einem dritten Fluidkanal verbindet, wobei am besten jedem dritten Fluidkanal ein eigener zweiter Auslass, welcher mit dem zweiten Fluidkanal verbunden ist, zugeordnet ist.

Die Zentrierelemente dienen somit ebenfalls der gezielten Führung des Fluides, indem sie das Fluid in bestimmte Bahnen, die hier dritte Fluidkanäle genannt werden, leiten.

Dadurch kann das Auftreten von Turbulenzen und eine damit verbundene Erwärmung des Kühlfluides vermieden werden. Zudem tragen solche Zentrierelemente, insofern sie derart ausgebildet sind, dass sie in einem zusammengefügten Zustand von Formkern und Kühlrohr im Kontakt mit der Kerninnenfläche bzw. der Außenfläche des Kühlrohrs stehen, zu einer stabilen Lagerung des Kühlrohrs innerhalb des Formkern bei. Die Zentrierelemente stützen das Kühlrohr folglich in Richtungen senkrecht zur Längsachse ab und zentrieren es innerhalb des Formkerns, sodass eine seitliche Verlagerung des Kühlrohrs innerhalb des Formkerns verhindert wird.

Die wendeiförmige Ausbildung der Stützelemente hat den Vorteil, dass das Kühlrohr während des Betriebs und der Strömung des Kühlfluids deutlich stabiler innerhalb des Formkerns gelagert ist. Dies ist dadurch zu erklären, dass ohne eine durch Zentrierelemente bewirkte Führung des Kühlfluids in Kanälen, kleinste Druck- bzw. Geschwindigkeitsdifferenzen ausreichen, um das Kühlrohr im Betrieb zu destabilisieren oder sogar in Schwingung zu versetzten. Auftretende Druck- und Geschwindigkeitsdifferenzen werden allerdings durch die wendeiförmige Führung des Kühlfluids ausgeglichen. Beispielsweise kann konstruktionsbedingt die Schmelze auf einer Seite des Formkerns heißer sein, als auf der anderen. Durch die wendeiförmige Führung des Kühlfluids werden dann annähernd alle Partikel des Kühlfluids an der Kühlung der heißeren Seite beteiligt, was bei einer geradlinigen Führung nicht der Fall wäre. Dadurch wird die Kühlung effizienter, wodurch kürzere Zykluszeiten ermöglicht werden.

In einer besonders bevorzugten Ausführungsform ist das Kühlrohr durch ein 3D-Druckverfahren hergestellt. Der Vorteil des 3D-Druckverfahren besteht in diesem Zusammenhang darin, dass jede beliebige Anordnung der Fluidkanäle und der Zentrierelement - sei sie auch noch so kompliziert - einfach hergestellt werden kann.

In einer weiteren bevorzugten Ausführungsform ist das Kühlrohr einstückig ausgebildet. Eine einstückige Ausbildung ist vorteilhaft, da keine Naht- oder Klebestellen existieren, die zumeist einem erhöhten Verschleiß ausgesetzt sind. Daher wird durch eine einstückige Ausbildung eine längere Lebensdauer des Kühlrohrs gewährleistet.

In diesem Zusammenhang wird unter einstückig eine Ausbildung in einem Stück und aus demselben Material verstanden. Elemente, welche beispielsweise mittels Kleben, Löten oder Schweißen miteinander verbunden sind, sind nicht einstückig im Sinne der vorliegenden Erfindung mit dem jeweiligen Element bzw. der jeweiligen Fläche ausgebildet. Eine solche einstückige Ausbildung ist vorteilhaft, da in diesem Fall das Kühlfluid nicht zusätzliche Strömungshindernisse umfließen muss, wie dies beispielsweise bei einer getrennten Ausbildung der Fall wäre

In einer besonderen Ausführungsform besteht das Kühlrohr aus Kunststoff und vorzugsweise aus Polyamid (PA) oder Acrylnitril-Butadien-Styrol-Copolymere (ABS). Alternativ ist auch eine Herstellung aus Polyvinylchlorid (PVC) vorteilhaft. Kunststoff bietet als Material die Vorteile, dass es einerseits kostengünstig ist und andererseits leicht in eine gewünschte Form gebracht wer-den kann. Insbesondere in Verbindung mit einem 3D-Druckverfahren, kann ein Kühlrohr mit hoher Güte und beliebiger Form aus PA, ABS oder PVC hergestellt werden.

Die vorliegende Erfindung umfasst zudem auch ein Kernkühlsystem eines Spritzgießwerkzeuges zum Spritzgießen von Preforms aus Kunststoff mit einem Formkern. Der Formkern hat dabei die Gestalt einer einseitig geschlossenen, hohlen Hülse mit einer Längsachse, einer Kernaußenfläche und einer Kerninnenfläche. Ferner weist das Kernkühlsystem ein Kühlrohr der beschriebenen Art auf. Das Kühlrohr ist dabei derart im Formkern angeordnet, dass ein sich an den ersten Fluidkanal anschließender dritter Fluidkanal durch den zwischen der Außenfläche des Kühlrohrs und der Kerninnenfläche verbleibenden Spalt gebildet wird.

In einer besonders bevorzugten Ausführungsform ist der Abstand zwischen der Kerninnenfläche und der Außenfläche des Kühlrohrs entlang des Kernkühlkanals im Wesentlichen konstant. Dadurch ergibt sich im Wesentlichen eine gleichmäßige Geschwindigkeit der Strömung innerhalb des Spalts zwischen der Kerninnenfläche und der Außenfläche des Kühlrohrs (im dritten Fluidkanal), wodurch eine homogene Kühlung des Preforms bewirkt wird. In einer bevorzugten Ausführungsform beträgt der maximale Abstand zwischen der Außenfläche des Kühlrohrs und der Kerninnenfläche des Formkerns und damit die maximale Ausdehnung des dritten Fluidkanals in radialer Richtung 3 mm. Für manche Anwendungsfälle hat sich ein maximaler Abstand zwischen der Außenfläche des Kühlrohrs und der Kerninnenfläche des Formkerns von 2 mm als vorteilhaft erwiesen.

Weitere Vorteile, Merkmale und Anwendungsmöglichkeiten der vorliegenden Erfindung werden deutlich anhand der folgenden Beschreibung bevorzugter Ausführungsformen. Es zeigen:
- Figur 1:: eine perspektivische Ansicht einer Ausführungsform des erfindungsgemäßen Kühlrohrs,
- Figur 2:: eine Schnittansicht des in Figur 1 gezeigten Kühlrohrs,
- Figur 3:: eine Ansicht auf das hintere Ende des Kühlrohrs von Figur 1 und
- Figur 4:: eine Schnittansicht durch ein erfindungsgemäßes Kernkühlsystem.

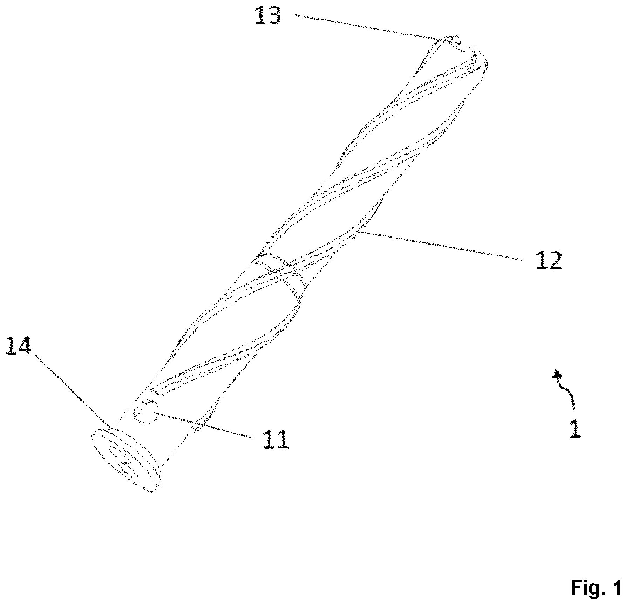

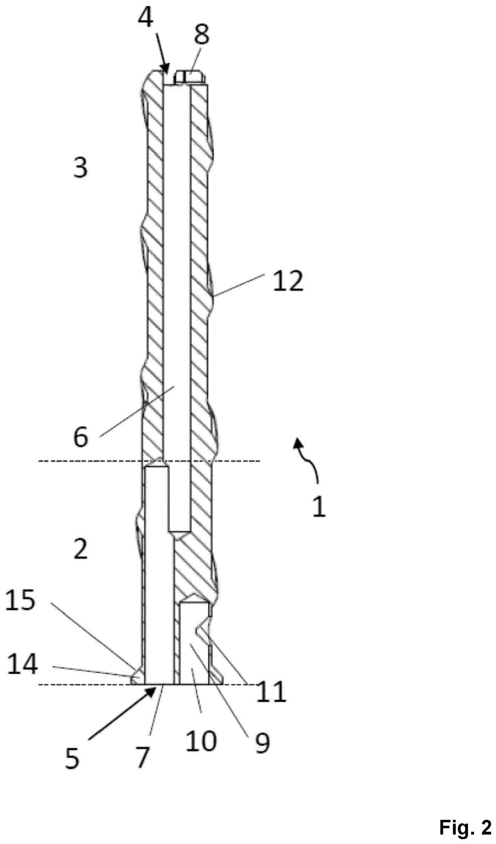

In den Figuren 1-3 sind eine perspektivische Ansicht, eine Schnittansichten sowie eine Ansicht von unten auf eine Ausführungsform des erfindungsgemäßen Kühlrohrs 1 gezeigt. Das Kühlrohr hat einen vorderen Abschnitt 3, welches das vordere Ende 4 des Kühlrohrs 1 umfasst, sowie einen hinteren Abschnitt 2, welcher das hintere Ende 5 des Kühlrohrs 1 umfasst.

Zwischen dem hinteren Ende 5 und dem vorderen Ende 4 erstreckt sich ein erster Fluidkanal 6, welcher von einem ersten Einlass 7 und einem ersten Auslass 8 begrenzt wird.

Des Weiteren ist ein zweiter Fluidkanal 9 vorgesehen, der sich von dem zweiten Einlass 10 bis zu dem zweiten Auslass 11 erstreckt. Es können auch mehrere zweite Auslässe 11 vorgesehen sein, die alle mit dem zweiten Fluidkanal 9 verbunden sind. Der hintere Abschnitt 2 hat einen größeren Außendurchmesser als der vordere Abschnitt 3. Im hinteren Abschnitt 2 sind sowohl der erste Fluidkanal 6 als auch der zweite Fluidkanal 9 angeordnet, während im vorderen Abschnitt 3 lediglich der erste Fluidkanal 6 angeordnet ist.

An der Außenfläche des Kühlrohrs 1 sind mehrere Zentrierelemente 12 angeordnet, die sich wendelförmig in Richtung der Längsachse des Kühlrohrs 1 über den vorderen Abschnitt 3 des Kühlrohrs 1 erstrecken.

Es ist zu erkennen, dass der zweite Auslass 8 einerseits in der vorderen Stirnfläche des Kühlrohrs 1 angeordnet ist, jedoch andererseits Ausnehmungen 13 in der Außenfläche des Kühlrohrs 1 aufweist. Jede Ausnehmung 13 ist zwischen zwei benachbarten Zentrierelementen 12 angeordnet. Jeder zweite Auslass 11 ist ebenfalls zwischen zwei benachbarten Zentrierelementen 12 angeordnet.

Am hinteren Abschnitt 2 des Kühlrohrs 1 ist ein Flansch 14 vorgesehen, der eine Stützfläche 15 aufweist, welche gegenüber der Längsachse des Kühlrohrs 1 geneigt ist.

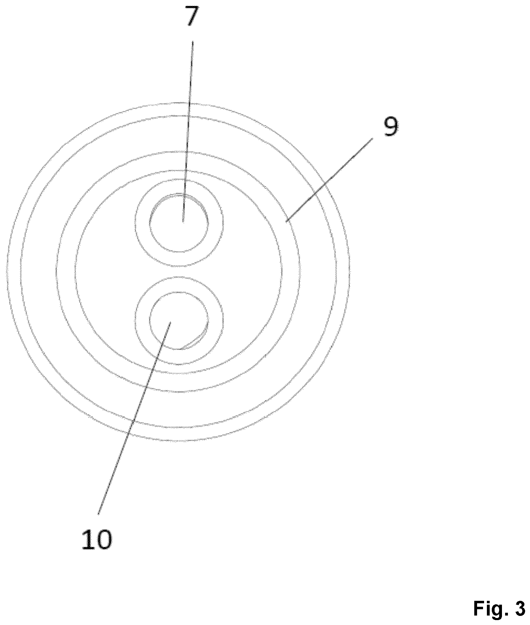

In Figur 3 ist eine Ansicht von unten auf das hintere Ende 5 des Kühlrohrs 1 dargestellt. Man erkennt den ersten Einlass 7 und den zweiten Einlass 10. Die beiden Einlässe 7, 10 sind derart angeordnet, dass sie durch eine Drehung um 180° um die Längsachse ihre Positionen tauschen. Da, wie weiter unten noch im Detail erläutert wird, über einen der beiden Einlässe 7, 10 Kühlfluid zugeführt und über den anderen der beiden Einlässe 7, 10 Kühlfluid abgeführt wird, kann die Stromrichtung des Kühlfluid innerhalb des Kernkühlsystems dadurch umgekehrt werden, dass das Kühlrohr 1 um 180° um seine Längsachse gedreht wird.

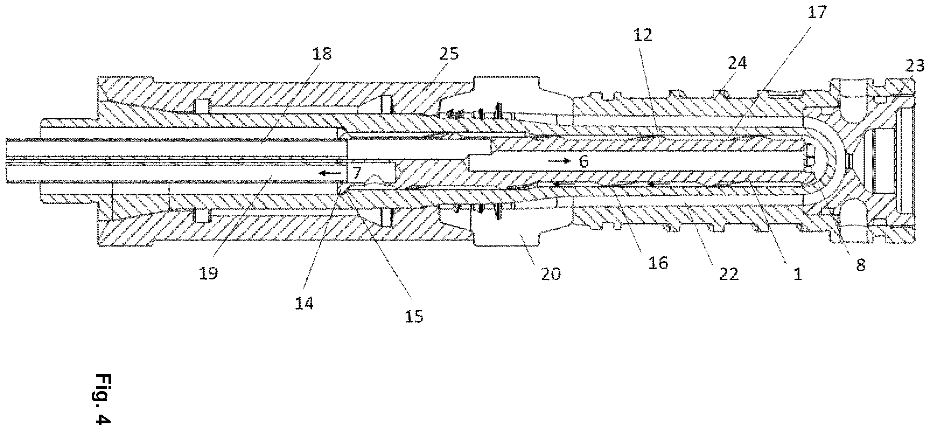

In Figur 4 ist eine Schnittansicht eines Kernkühlsystems gemäß der Erfindung gezeigt. Man erkennt, dass das Kühlrohr 1 in einen Formkern 16 eingesetzt ist. Die Zentrierelemente 12 liegen an der Innenfläche des Formkerns 16 an, sodass zwischen zwei Zentrierelementen 12, der Außenfläche des Kühlrohrs 1 und der Innenfläche des Formkerns 16 ein dritter Fluidkanal 17 gebildet wird, der sich wendeiförmig um das Kühlrohrs 1 erstreckt. Da bei der gezeigten Ausführungsform 3 Zentrierelemente 12 vorgesehen sind, wird jeweils zwischen zwei benachbarten Zentrierelementen 12 ein dritter Fluidkanal gebildet.

Wie in Figur 4 dargestellt ist, kann Kühlfluid über eine Kühlfluidzuführung 18 in den ersten Fluidkanal 6 geleitet werden. Das Kühlfluid verlässt am vorderen Ende über den ersten Auslass 8 das Kühlrohr und wird dann über die wendeiförmigen dritten Fluidkanäle 17 entlang der Außenfläche des Kühlrohrs 1 in Richtung des hinteren Endes 5 transportiert bis das Kühlfluid über den zweiten Auslass in den zweiten Fluidkanal 7 eintritt und schließlich über den zweiten Einlass in die Kühlfluidrückführung 19 das Kühlsystem wieder verlässt. Die Kühlfluidstromrichtung innerhalb des Formkerns 16 kann auf einfache Weise umgekehrt werden, wenn das Kühlrohr 1 um 180° um seine Längsachse gedreht wird, sodass dann die Kühlfluidzufuhr 18 mit dem zweiten Fluidkanal 7 und die Kühlfluidrückführung 19 mit dem ersten Fluidkanal 6 verbunden ist.

Man erkennt, dass der Formkern 16 an seinem hinteren Ende einen Abschnitt mit erweitertem Innendurchmesser aufweist, in welchem der Flansch 14 des Kühlrohrs 1 zu liegen kommt.

In den Figuren 4 und 5 sind weiterhin die Halsbacken 20,21, die Kavität 24 und der Bodeneinsatz 23 gezeigt. Diese Elemente sind relativ zu dem Formkern 16 derart angeordnet, dass sich zwischen ihnen ein Formraum ergibt, in welchem der Preform 22 angeordnet ist. Weiterhin ist ein Stützelement 25 zu erkennen, mit welchem der Formkern 16 gehalten wird.

### Bezugszeichenliste

- 1: Kühlrohr
- 2: hinterer Abschnitt
- 3: vorderer Abschnitt
- 4: vorderes Ende
- 5: hinteres Ende
- 6: erster Fluidkanal
- 7: erster Einlass
- 8: erster Auslass
- 9: zweiter Fluidkanal
- 10: zweiter Einlass
- 11: zweiter Auslass
- 12: Zentrierelement
- 13: Ausnehmung
- 14: Flansch
- 15: Stützfläche
- 16: Formkern
- 17: dritter Fluidkanal
- 18: Kühlfluidzuführung
- 19: Kühlfluidrückführung
- 20, 21: Halsbacke
- 22: Preform
- 23: Bodeneinsatz
- 24: Kavität
- 25: Stützelement

## Patentansprüche

1. Kühlrohr (1) mit einer Außenfläche und mit einer sich von einem hinteren Ende zu einem vorderen Ende erstreckenden Längsachse für einen Formkern (16) eines Spritzgießwerkzeuges zum Spritzgießen von Preforms (22) aus Kunststoff, wobei das Kühlrohr (1) einen ersten Einlass und einen ersten Auslass aufweist, die über einen ersten Fluidkanal miteinander verbunden sind, wobei der erste Einlass (7) näher am hinteren Ende angeordnet ist als der erste Auslass (8), **dadurch gekennzeichnet, dass** das Kühlrohr (1) einen zweiten Einlass und einen zweiten Auslass aufweist, die über einen zweiten Fluidkanal miteinander verbunden sind, wobei der zweite Einlass (10) näher am hinteren Ende angeordnet ist als der zweite Auslass (11) und der erste Auslass (8) näher am hinteren Ende angeordnet ist als der zweite Auslass (11).

2. Kühlrohr (1) nach Anspruch 1, **dadurch gekennzeichnet, dass** das Kühlrohr (1) einen vorderen Abschnitt, welcher das vordere Ende (4) umfasst, und einen hinteren Abschnitt, welcher das hintere Ende (5) umfasst, aufweist, wobei der erste Fluidkanal (6) im vorderen und im hinteren Abschnitt angeordnet ist und der zweite Fluidkanal (9) nur im hinteren Abschnitt angeordnet ist, wobei vorzugsweise der hintere Abschnitt (2) eine größere Querschnittsfläche als der vordere Abschnitt (3) aufweist.

3. Kühlrohr (1) nach Anspruch 1 oder 2, **dadurch gekennzeichnet, dass** der erste und der zweite Einlass (10) derart positioniert sind, dass bei einer Drehung des Kühlrohres (1) um 180° um seine Längsachse der erste und der zweite Einlass (10) Ihrer Positionen tauschen.

4. Kühlrohr (1) nach einem der Ansprüche 1-3, **dadurch gekennzeichnet, dass** der erste Einlass (7) und/oder der zweite Einlass (10) in der Stirnfläche des Kühlrohrs (1) am hinteren Ende angeordnet sind.

5. Kühlrohr (1) nach einem der Ansprüche 1-4, **dadurch gekennzeichnet, dass** der zweite Auslass (11) in der Mantelfläche angeordnet ist, wobei vorzugsweise der erste Auslass (8) in der Stirnfläche des Kühlrohrs (1) am vorderen Ende angeordnet ist.

6. Kühlrohr (1) nach einem der Ansprüche 1-5, **dadurch gekennzeichnet, dass** an der Außenfläche des Kühlrohrs (1) zumindest ein über die Außenfläche vorstehendes Zentrierelement (12) vorgesehen ist, wobei vorzugsweise sich das Zentrierelement (12) wendeiförmig in Längsrichtung um die Außenfläche des Kühlrohrs (1) erstreckt.

7. Kühlrohr (1) nach Anspruch 6, **dadurch gekennzeichnet, dass** zumindest zwei Zentrierelemente (12) vorgesehen sind, sodass, wenn das Kühlrohr (1) in einen Formkern (16) eingesetzt wird, dessen Innendurchmesser in etwa dem Außendurchmesser der Zentrierelemente (12) entspricht, zwischen den Zentrierelementen (12), der Außenfläche des Kühlrohrs (1) und der Innenfläche des Formkernes (16) dritte Fluidkanäle gebildet werden, wobei vorzugsweise der zweite Auslass (11) den zweiten Fluidkanal mit einem dritten Fluidkanal verbindet, wobei am besten jedem dritten Fluidkanal ein eigener zweiter Auslass zugeordnet ist.

8. Kühlrohr (1) gemäß einem der Ansprüche 1 bis 7, **dadurch gekennzeichnet, dass** das Kühlrohr (1) mit einem 3D-Druck Verfahren hergestellt ist.

9. Kühlrohr (1) gemäß einem der Ansprüche 1 bis 8, **dadurch gekennzeichnet, dass** das Kühlrohr (1) einstückig ausgebildet ist.

10. Kühlrohr (1) gemäß einem der Ansprüche 1 bis 9, **dadurch gekennzeichnet, dass** das Kühlrohr (1) aus Kunststoff, vorzugsweise aus PA, ABS oder PVC besteht.

11. Kernkühlsystem eines Spritzgießwerkzeuges zum Spritzgießen von Preforms (22) aus Kunststoff mit einem Formkern (16), welcher die Gestalt einer einseitig geschlossenen, hohlen Hülse hat mit einer Längsachse, einer Kernaußenfläche und einer Kerninnenfläche, und einem Kühlrohr (1) nach einem der Ansprüche 1 bis 10, wobei das Kühlrohr (1) derart im Formkern (16) angeordnet ist, dass zumindest ein dritter Fluidkanal durch den zwischen der Außenfläche des Kühlrohrs (1) und der Kerninnenfläche verbleibenden Spalt gebildet wird.

12. Kernkühlsystem nach Anspruch 11, **dadurch gekennzeichnet, dass** an der Außenfläche des Kühlrohrs (1) zumindest ein über die Außenfläche vorstehendes Zentrierelement (12) vorgesehen ist, wobei vorzugsweise sich das Zentrierelement (12) wendelförmig in Längsrichtung um die Außenfläche des Kühlrohrs (1) erstreckt, wobei das zumindest eine Zentrierelement (12) mit der Kerninnenfläche in Kontakt steht.

13. Kernkühlsystem nach Anspruch 11 oder 12, **dadurch gekennzeichnet, dass** entlang des Kernkühlkanals der Abstand zwischen der Kerninnenfläche und der Außenfläche des Kühlrohrs (1) im Wesentlichen konstant ist.
